# EUROPEAN PATENT APPLICATION

(11) **EP 3 235 578 A1**
(43) Date of publication of application: **25.10.2017**
(21) Application number: 16837971.7
(22) Date of filing: 25.02.2016
(51) Int. Cl.: B21F 11/00, B23B 5/14

(54) **NOVEL METHOD FOR SYNCHRONOUS AND SPECIFIED-LENGTH CUTTING OF CONTINUOUSLY-FORMED MATERIALS BY MULTIPLE CUTTING MECHANISMS CONNECTED IN SERIES**

(30) Priority: 12.01.2016 CN 201610018663
(71) Applicant: Dalian Field Heavy-Machinery Manufacturing Co., Ltd, Tiexi Development District, Pulandian Dalian Liaoning 116200 (CN)
(72) Inventor: GAO, Guowu, Dalian Liaoning 116200 (CN)
(74) Representative: Boult Wade Tennant
(86) International application number: PCT/CN2016/074532
(87) International publication number: WO 2017/121013

(57) **Abstract**

Most existing cutting-off machines on production lines for continuously-processed materials such as steel pipes and profile steel are single-cutter holder synchronous and fixed-length cutting-off machines. Since only one cutter holder provided with a cutter is available, the travelling distance of the cutter holder is small, the time for the cutter to cut off the materials is short, and such cutting-off machine is not suitable for producing short-length products and not suitable for a high-speed production line either. In order to overcome the defects of the prior art, the invention provides a novel method for synchronous and fixed-length cutting-off of continuously-processed materials through multiple cutter holders arranged in series, in particular to a multi-cutter holder series-arrangement synchronous and fixed-length cutting-off machine. The multi-cutter holder series-arrangement synchronous and fixed-length cutting-off machine is provided with two or more cutter holders provided with cutters. The cutter holders are installed on tracks parallel to the materials in a series mode and driven by corresponding driving devices to move back and forth according to a set procedure, and the cutters on the cutter holders cut off the materials according to a set length in the case that the moving speed of the cutter holders becomes the same as that of the materials. The cutting-off machine can be adapted to high-speed production lines, and allow smaller minimum fixed length, longer service life of the cutters, better quality of notches, and smaller number of times of halts for cutter replacement.

## Description

### TECHNICAL FIELD

The present disclosure relates to, in a technical field of production lines for continuously-processed materials such as steel pipe and profile steel, a novel method of cutting off materials with a fixed length in the state that cutting-off machine has a same moving speed as the production line, and specifically relates to a novel method for synchronous and fixed-length cutting-off of continuously-processed materials through multiple cutter holders arranged in series.

### BACKGROUND

Most existing cutting-off machines on production lines for continuously-processed materials such as steel pipes and profile steel are single-cutter holder synchronous and fixed-length cutting-off machines. For such cutting-off machines, only one cutter holder provided with a cutter is available. When a material has moved across a preset length, the cutter holder begins to move from an original point on a track parallel to the material, following the material. When a moving speed of the cutter holder becomes the same as that of the material, a cutter on the cutter holder cuts off the material and then the cutter holder returns back to the original point and prepares for next cutting-off. A travelling distance of the cutter holder is smaller than a fixed length of the material, to ensure that there is enough time for the cutter holder to return back to the original point after one cutting-off process is completed. As a speed of the production line is higher, the fixed length of the material is smaller and thus the time for the cutter tool to cut off the material is shorter. Such cutting-off machine is not suitable for producing short fixed-length products and not suitable for a high-speed production line either, since quality of notches is bad and service life of the cutters is short due to the short time for cutting off the material. Therefore, it is necessary to develop a novel method of cutting-off materials.

### SUMMARY

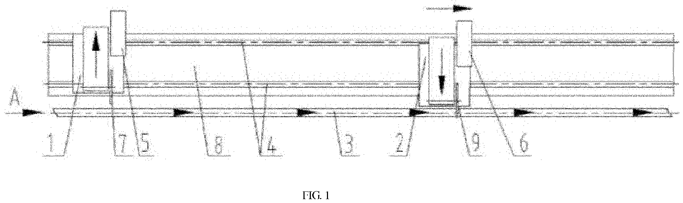

In order to overcome the defects of the prior art, the present disclosure proposes a novel method for synchronous and fixed-length cutting-off of continuously-processed materials through multiple cutter holders arranged in series. The specific technical solutions are described as follows: providing two or more cutter holders each provided with a cutter, wherein the cutter holders are installed in series on tracks parallel to a material, and are driven by their respective driving devices to move back and forth according to a set procedure; and in the case that a moving speed of the cutter holders becomes the same as that of the material, the cutters on the cutter holder cut off the material according to a set length. For convenience of description, working process is described by taking a double-cutter holder series-arrangement synchronous and fixed-length cutting-off machine as shown in FIG. 1, as an example.

The double-cutter holder series-arrangement synchronous and fixed-length cutting-off machine is shown in FIG. 1:

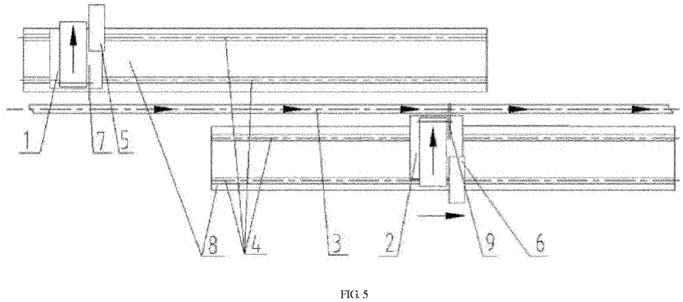

The double-cutter holder series-arrangement synchronous and fixed-length cutting-off machine is provided with two cutter holders, wherein cutter holder 1 and cutter holder 2 are installed in series on tracks 4 parallel to a material 3, and can be installed on the same track or on their respective tracks. As shown in FIG. 5, a fixed base 8 is disposed below the tracks 4. The cutter holder 1 and cutter holder 2 are driven by their respective driving devices 5, 6 to move back and forth on the tracks according to a set procedure. The cutter holder 1 is provided with a cutter 7, and the cutter holder 2 is provided with a cutter 9, and both the cutter 7 and the cutter 9 are used to cut off the material 3. One cycle of the working process of the cutting-off machine is described as follows:

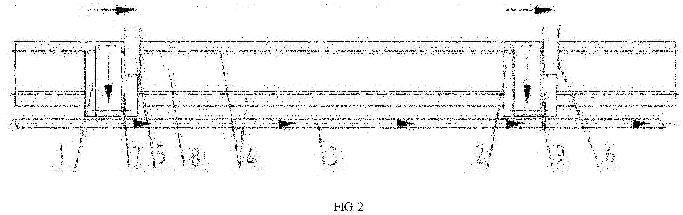

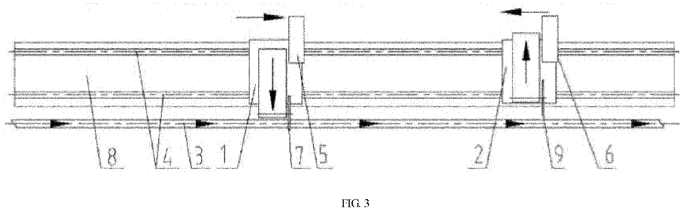

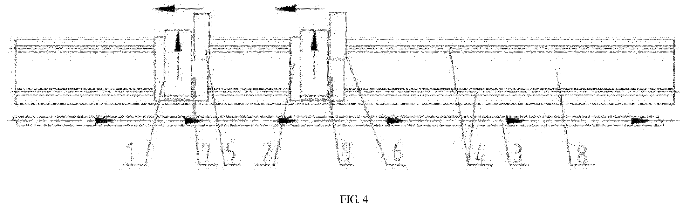

as shown in FIG. 1, during continuously processing of the material 3, when the material 3 enters into a cutting-off range of the cutter holder 2 with a preset length, the driving device 6 is started to accelerate the cutter holder 2 from a starting point thereof; in the case that the moving speed of the cutter holder 2 becomes the same as that of the material 3, the cutter 9 on the cutter holder 2 begins to cut the material 3. As shown in FIG. 2, the material 3 continues moving, and in the case that the material 3 enters into a cutting-off range of the cutter holder 1 with a preset length, the driving device 5 is started to accelerate the cutter holder 1 from a starting point thereof; and in the case that the moving speed of the cutter holder 1 becomes the same as that of the material 3, the cutter 7 on the cutter holder 1 begins to cut the material 3. As shown in FIG. 3, the cutter holder 2 returns back to the starting point thereof after the material 3 is cut off. As shown in FIG. 4, the cutter holder 1 returns back to the starting point thereof after the material 3 is cut off. The cutting-off machine repeats the above working process and cuts off the material in accordance with a set length, as long as the material on the production line is continuously processed. As can be seen, compared to a single-cutter holder synchronous and fixed-length cutting-off machine, the travelling distance of the cutter holders in the double-cutter holder series-arrangement synchronous and fixed-length cutting-off machine can be set longer than the fixed length of the material. Moreover, for each cutter holder in the double-cutter holder series-arrangement synchronous and fixed-length cutting-off machine, one cutting-off cycle corresponds to a production time for two material products, and each cutter holder experiences merely one acceleration and deceleration process during production of the two material products. In contrary, the travelling distance of the cutter holder in the single-cutter holder synchronous and fixed-length cutting-off machine needs to be shorter than the fixed length of the material, one cutting-off cycle corresponds to the production time for one product, and the cutter holder experiences two acceleration and deceleration processes during production of two material productions. It can be seen that, the double-cutter holder series-arrangement synchronous and fixed-length cutting-off machine has much longer time for cutting off the material than the single-cutter holder synchronous and fixed-length cutting-off machine. Therefore, for the same production line speed and the same fixed length of the material, the quality of the notches is better and the service life of the cutter is longer in the case of the double-cutter holder series-arrangement synchronous and fixed-length cutting-off machine. In other words, for the same quality of the notches and the same service life of the cutter, the production line speed can be made higher and the fixed length of the material can be made shorter in the case of the double-cutter holder series-arrangement synchronous and fixed-length cutting-off machine. Additionally, for the same amount of products, the number of working times of each cutter on the double-cutter holder series-arrangement synchronous and fixed-length cutting-off machine is reduce by half compared to the cutter on the single-cutter holder synchronous and fixed-length cutting-off machine. Therefore, the number of times for halting the production line to replace the cutters is reduced, which is conducive to improve efficiency of the production line and reduce loss of waste products.

The multi-cutter holder series-arrangement synchronous and fixed-length cutting-off machine has the similar operating principle as the double-cutter holder series-arrangement synchronous and fixed-length cutting-off machine, and has two or more cutter holders. These cutter holders are installed in series on the tracks which parallel to the material. The cutter holders may be installed on a same track, or installed on their respective tracks. The tracks can be disposed on a same side of the material or on two opposite sides of the material. These cutter holders are driven by their respective driving devices to move back and forth in a set procedure, and in the case that a moving speed of these cutter holders becomes the same as that of the material, the cutter holders cut off the material according to a set length. As the number of the cutter holders is greater, travelling distance of the cutter holders can be made to be longer and thus the cutters have more time to cut off the material. Such a cutting-off machine can thus be adapted to a high production line speed, allow smaller minimum fixed length, longer service life of the cutters, better quality of notches and less number of times of halts to replace the cutters.

### BRIEF DESCRIPTION OF THE DRAWINGS

FIG. 1 is a schematic diagram showing that a cutter holder 1 is at a starting point and a cutter holder 2 follows and cuts off a material 3 in a specific embodiment of the present disclosure.
FIG. 2 is a schematic diagram showing that the cutter holder 1 and the cutter holder 2 follow and cut off the material 3 in a specific embodiment of the present disclosure.
FIG. 3 is a schematic diagram showing that the cutter holder 1 follows and cuts off the material 3 and the cutter holder 2 returns back after the cutting-off is completed in a specific embodiment of the present invention.
FIG. 4 is a schematic diagram showing that the cutter holder 1 and the cutter holder 2 return back after completing the cutting-off in a specific embodiment of the present disclosure.
FIG. 5 is a schematic diagram showing that there are different tracks in the present disclosure.

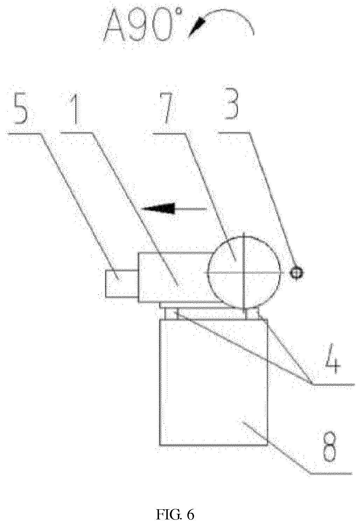

FIG. 6 is a schematic diagram showing that a cutter on the cutter holder 1 is not cutting.

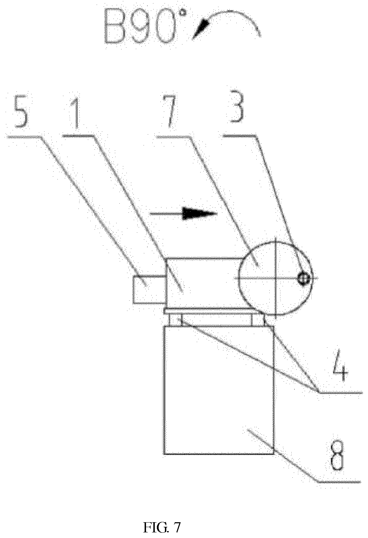

FIG. 7 is a schematic diagram showing that the cutter on the cutter holder 1 is cutting.

### DETAILED DESCRIPTION

Now, the implementations of the present disclosure will be further described by reference to a double-cutter holder series-arrangement synchronous and fixed-length cutting-off machine, which is one implementation of the multi-cutter holder series-arrangement synchronous and fixed-length cutting-off machine. The double-cutter holder series-arrangement synchronous and fixed-length cutting-off machine mainly includes cutter holders 1, 2, tracks 4, a base 8, driving devices 5 and 6, and cutters 7 and 9. The cutter holders 1, 2 are installed in series on the tracks 4 parallel to a material 3. The cutter holders 1, 2 may be install on a same track 4, or installed on their respective tracks 4. The cutter holders 1, 2 are driven by driving devices 5, 6 to move back and forth on their respective tracks 4 according to a set procedure. In the case that a moving speed of the cutter holders becomes the same as that of the material, cutters on the cutter holders cut off the material 3 alternatively in accordance with a set length. As shown in FIG. 1, the cutter holder 1 stops at its starting point; when the material 3 enters into a cutting-off range of the cutter holder 2 with a preset length, the driving device 6 is started to accelerate the cutter holder 2 from a starting point thereof; in the case that the moving speed of the cutter holder 2 becomes the same as that of the material 3, the cutter 9 on the cutter holder 2 begins to cut the material 3. As shown in FIG. 2, the material 3 continues moving, and in the case that the material 3 enters into a cutting-off range of the cutter holder 1 with a preset length, the driving device 5 is started to accelerate the cutter holder 1 from the starting point; and in the case that the moving speed of the cutter holder 1 becomes the same as that of the material 3, the cutter 7 on the cutter holder 1 begins to cut the material 3. As shown in FIG. 3, the cutter holder 2 returns back to the starting point thereof after the material 3 is cut off. As shown in FIG. 4, the cutter holder 1 returns back to the starting point thereof after the material is cut off. The double-cutter holder series-arrangement synchronous and fixed-length cutting-off machine repeats the above working process and cuts off the material in accordance with a set length, as long as the material on the production line is continuously processed.

Similarly, a multi-cutter holder series-arrangement synchronous and fixed-length cutting-off machine has two or more cutter holders. These cutter holders are installed in series on tracks parallel to a material. The cutter holders are installed on a same track, or installed on their respective tracks. The tracks can be disposed on a same side of the material or on two opposite sides of the material. These cutter holders are driven by their respective driving device to move back and forth in a preset sequence, and in the case that a moving speed of these cutter holders becomes the same as that of the material, the cutter holders cut off the material according to a set length. As the number of the cutter holders is greater, travelling distance of the cutter holders can be made to be longer and thus the cutters will have more time to cut off the material. Such a cutting-off machine can thus be adapted to a production line with a higher speed, allow smaller minimum fixed length, longer service life of the cutters, better quality of notches and less number of times for halts to replacement the cutters.

## Claims

1. A novel method for synchronous and fixed-length cutting-off of continuously-processed material through multiple cutter holders arranged in series, in a technical field of production line for continuously-processed materials such as steel pipe and profile steel, **characterized in that**, providing two or more cutter holders, wherein the cutter holders are installed in series on tracks parallel to a material, and are driven by their respective driving devices to move back and forth on the tracks according to a set procedure; and in the case that a moving speed of the cutter holders becomes the same as that of the material, the cutter holders cut off the material according to a set length, wherein as a particular example of the method, a double-cutter holder series-arrangement synchronous and fixed-length cutting-off machine has a working cycle as follows:
- when a material 3 enters into a cutting-off range of a cutter holder 2 with a preset length, a driving device 6 is started to accelerate the cutter holder 2 from a starting point thereof, and in the case that a moving speed of the cutter holder 2 becomes the same as that of the material 3, a cutter 9 on the cutter holder 2 begins to cut the material 3,
- the material 3 continues moving and in the case that the material 3 enters into a cutting-off range of the cutter holder 1 with a preset length, a driving device 5 is started to accelerate a cutter holder 1 from a starting point thereof, and in the case that a moving speed of the cutter holder 1 becomes the same as that of the material 3, a cutter 7 on the cutter holder 1 begins to cut the material 3;
- the cutter holder 2 returns back to the starting point thereof after the material 3 is cut off,
- the cutter holder 1 returns back to the starting point thereof after the material 3 is cut off,
- keep repeating the above working process, as the material is continuously processed,
- in the case that the number of the cutter holders is more than two, the working cycle follows the above principle and each cutter holder starts, accelerates, cuts off the material and returns back according to a preset sequence.

## Amended claims

### Amended claims under Art. 19.1 PCT

**1.** A method for synchronous and fixed-length cutting-off of continuously-processed material through multiple cutter holders arranged in series, comprises:
installing in series multiple cutter holders on tracks parallel to the continuously-processed material, the multiple cutter holders are driven by their respective driving devices to move back and forth on the tracks;
when the continuously-processed material sequentially enters into a cutting-off range of each of the multiple cutter holders with a preset length in a feeding direction, said each of the multiple cutter holders cuts off the continuously-processed material according to a set length upon that a moving speed of said each of the multiple cutter holders becomes the same as that of the continuously-processed material.

**2.** According to the cutting-off method of claim 1, wherein, said each of the multiple cutter holders is accelerated from a starting point to a state of having the same moving speed as the continuously-processed material.

**3.** According to the cutting-off method of claim 2, wherein, said each of the multiple cutter holders returns back to the starting point after cutting off the continuously-processed material.

**4.** According to the cutting-off method of claim 1, wherein, said each of the multiple cutter holders is provided with a cutter for cutting off the continuously-processed material.

**5.** According to the cutting-off method of claim 1, wherein, the multiple cutter holders are installed on the same track or on different tracks.

**6.** According to the cutting-off method of claim 1, wherein, the tracks are disposed on a same side of the continuously-processed material or on two opposite sides of the continuously-processed material.

**7.** A multi-cutter holder series-arrangement synchronous and fixed-length cutting-off machine for continuously-processed material, comprising:
tracks, which are disposed parallel to the continuously-processed material;
multiple cutter holders, installed in series on the tracks;
driving devices, being capable of driving their respective one of the multiple cutter holders to move back and forth on the tracks; and
a control device, which is configured to control the driving devices to drive each of the multiple cutter holders to move on the tracks, so that when the continuously-processed material sequentially enters into a cutting-off range of said each of the multiple cutter holders with a preset length in a feeding direction, said each of the multiple cutter holders cuts off the continuously-processed material according to a set length upon that a moving speed of said each of the multiple cutter holders becomes the same as that of the continuously-processed material.

**8.** According to the cutting-off machine of claim 7, wherein, said each of the multiple cutter holders is accelerated from a starting point to a state of having the same moving speed as the continuously-processed material.

**9.** According to the cutting-off machine of claim 8, wherein, said each of the multiple cutter holders returns back to the starting point after cutting off the continuously-processed material.

**10.** According to the cutting-off machine of claim 7, wherein, said each of the multiple cutter holders is provided with a cutter for cutting off the continuously-processed material.

**11.** According to the cutting-off method of claim 7, wherein, the multiple cutter holders are installed on the same track or on different tracks.

**12.** According to the cutting-off machine of claim 7, wherein, the tracks are disposed on a same side of the continuously-processed material or on two opposite sides of the continuously-processed material.

Statement under Art. 19.1 PCT
In response to the International Search Report prepared by the International Searching Authority dated October 19, 2016, Applicant respectfully requests that the following amendments are made to the above-identified application.

Applicant is submitting amendments to original claim 1, and redefining claims 2-12 of the above International application, wherein:
For new claim 1, support can be found from Paragraph 0003 in the original specification;
For new claim 2, support can be found from Lines 2-5 of Paragraph 0006 in the original specification;
For new claim 3, support can be found from Lines 5-6 of Paragraph 0006 in the original specification;
For new claim 4, support can be found from Line 4 of Paragraph 0005 in the original specification;
For new claim 5, support can be found from Lines 1-2 of Paragraph 0005 in the original specification;
For new claim 6, support can be found from Line 3 of Paragraph 0007 in the original specification;
For new claim 7, support can be found from Paragraph 0003 and Lines 1-3 of Paragraph 0015 in the original specification;
For new claim 8, support can be found from Lines 7-10 of Paragraph 0015 in the original specification;
For new claim 9, support can be found from Lines 10-11 of Paragraph 0015 in the original specification;
For new claim 10, support can be found from Line 4 of Paragraph 0005 in the original specification;
For new claim 11, support can be found from Line 2 of Paragraph 0016 in the original specification; and
For new claim 12, support can be found from Line 3 of Paragraph 0007 in the original specification.
The amendments to the claims are made based on the contents disclosed in the specification.
